# EUROPÄISCHE PATENTANMELDUNG

(11) **EP 1 571 361 A2**
(43) Veröffentlichungstag der Anmeldung: **07.09.2005**
(21) Anmeldenummer: 05004674.7
(22) Anmeldetag: 03.03.2005
(51) Int. Cl.: F16D 23/02

(54) **Verfahren zur Herstellung eines Konusringes**

(30) Priorität: 03.03.2004 DE 102004010335
(71) Anmelder: HOERBIGER Antriebstechnik GmbH, 86952 Schongau (DE)
(72) Erfinder: Back, Ottmar, 82362 Weilheim (DE)
(74) Vertreter: Schmitz, Hans-Werner

(57) **Zusammenfassung**

Die Erfindung betrifft ein Verfahren zur Herstellung eines Konusringes 1 mit folgenden Verfahrensschritten:
- Zuschneiden eines planen Trägerringes 2 aus Metall mit Lappen 3, 8 am Innen- oder Außendurchmesser;
- Aufbringen eines organischen Reibbelages 9 auf zumindestens eine Fläche des planen Trägerringes; und
- Umformen des mit dem Reibbelag 9 versehenen planen Trägerrings 2 in eine konische Form.

## Beschreibung

Die Erfindung betrifft ein Verfahren zur Herstellung eines Konusringes gemäß Anspruch 1 sowie einen durch dieses Verfahren hergestellten Konusring gemäß Anspruch 5.

Synchronisierungen in Schaltgetrieben werden zur Steigerung der Leistungsfähigkeit als Mehrfach-Konussynchronisierungen ausgeführt. Hierdurch entstehen Anordnungen, bei denen im nicht-geschalteten Zustand Ringspalte zwischen den Konusflächen der Synchronringe entstehen, an denen eine Relativdrehzahl ansteht. Je nach Positionierung im Getriebe sind die Ringspalte mehr oder weniger mit Ö1 befüllt. Abhängig von Spalthöhe, Ölfüllung sowie Makro- und Mikrogeometrie der Bauteiloberflächen entstehen Schleppmomente, die sowohl zu Wirkungsgradverlusten als auch einer Beeinträchtigung der Schaltqualität führen können.

Die im Ringspalt einer Mehrfach-Konussynchronisierung aufeinandertreffenden Oberflächen werden durch den Reibbelag und die Stahlgegenfläche bestimmt.

Die Makrogeometrie kann durch die Einbringung einer Nutgeometrie im Reibbelag oder in der Stahlgegenfläche gestaltet werden. Die Mikrogeometrie wird bestimmt durch die Art des Reibwerkstoffes und das Bearbeitungsverfahren der Stahlgegenfläche.

Aus im Rahmen der Erfindung durchgeführten Prüfstandsversuchen wurde ermittelt, dass offenporige Oberflächen des Reibwerkstoffes, wie sie bei Streusinterbelägen vorliegen, zu deutlich geringeren Schleppmomenten führen als glatte, geschlossene Oberflächen, wie sie bei organischen Belägen vorliegen.

Bekannte Konusringe mit organischen Reibbelägen werden bisher immer auf einen schon in seine Konusform verformten Trägerring aufgebracht und sind daher rund.

Es ist demgegenüber Aufgabe der vorliegenden Erfindung, ein Verfahren zur Herstellung eines Konusringes zu schaffen, mit dem es möglich ist, einen Konusring herzustellen, der ein geringeres Schleppmoment im Betrieb erzeugt.

Die Lösung dieser Aufgabe erfolgt durch die Merkmale des Anspruches 1.

Erfindungsgemäß wird der Umstand ausgenutzt, dass der Trägerring im Bereich der nach innen oder außen weisenden Lappen unterschiedliche Steifigkeiten aufweist, was es beim Umformen des zuvor mit einem Reibbelag versehenen planen Trägerrings in eine Konusform möglich macht, in der Rundheit des entstehenden Konusringes bewusst eine überlagerte Welligkeit einzubringen.

Die Welligkeit liegt hierbei innerhalb der für das Bauteil spezifizierten Rundheitstoleranz.

Durch die aufgebrachte Welligkeit wird bei der Benutzung des Konusringes in einer Mehrfach-Konussynchronisierung ein Einfedern der Welligkeit unter Belastung erreicht, sodass beim Synchronisieren keine Funktionsbeeinträchtigung erfolgt. Im gelüfteten Zustand des Synchronpaketes ergibt sich der Vorteil, dass die Welligkeit zu einer gezielten Distanzierung der relativ zueinander drehenden Bauteile führt. Dies reduziert den Aufbau von Schmierfilmen im Ringspalt.

Hinsichtlich des erfindungsgemäß hergestellten Konusringes ergibt sich somit zunächst der Vorteil eines gegenüber dem Stand der Technik geringeren Schleppmomentes. Dabei wird vorteilhafter Weise eine Beeinträchtigung der Beanspruchbarkeit des Konusringes vermieden.

Hinsichtlich des erfindungsgemäßen Verfahrens ergibt sich der Vorteil einer vereinfachten und damit preiswerteren Herstellbarkeit.

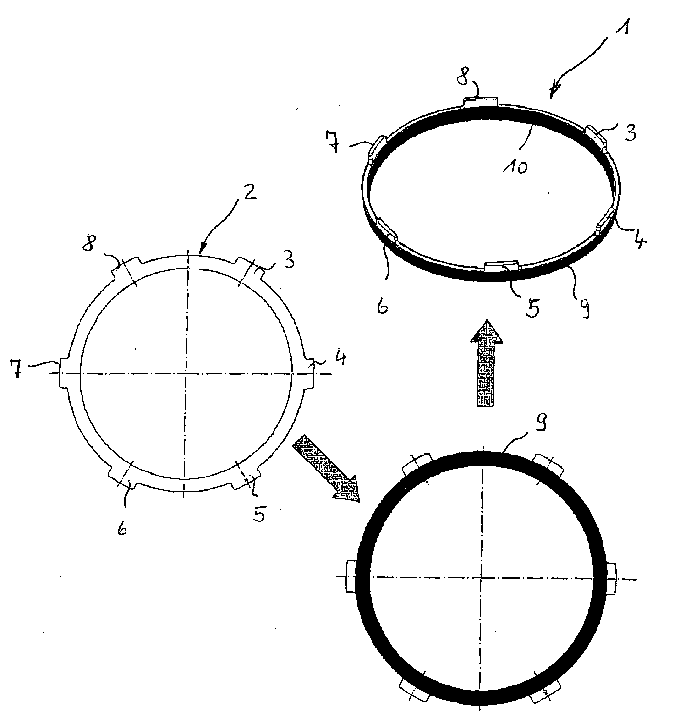

Nachfolgend wird ein Ausführungsbeispiel anhand der Zeichnung näher erläutert.

Die einzige Figur der Zeichnung stellt ein prinzipielles Schema des Fertigungsablaufs gemäß dem erfindungsgemäßen Verfahren dar.

Dementsprechend wird zur Herstellung eines erfindungsgemäßen Konusringes 1 zunächst ein planer Trägerring 2 aus Metall zugeschnitten. Wie die Figur verdeutlicht, weist der plane Trägerring 2 im Beispielsfalle am Außendurchmesser angeordnete Lappen 3 bis 8 auf.

Im nächsten Verfahrensschritt wird auf diesen planen Trägerring 2 zumindestens auf einer Fläche ein organischer Reibbelag aufgebracht.

Im letzten Verfahrensschritt wird der plane mit dem Reibbelag 9 versehene Trägerring 2 in eine konische Form umgeformt. Die Figur verdeutlicht hierbei, dass der durch diesen Herstellungsvorgang erzeugte Konusring 1 im Beispielsfalle sowohl an seiner Innenfläche wie an seiner Außenfläche einen Reibbelag aufweist, der mit den Bezugsziffern 9 bzw. 10 gekennzeichnet ist.

### Bezugszeichenliste

- 1: Konusring
- 2: Trägerring
- 3-8: Lappen
- 9, 10: Reibbelag

## Patentansprüche

1. Verfahren zur Herstellung eines Konusringes (1) mit folgenden Verfahrensschritten:
- Zuschneiden eines planen Trägerringes (2) aus Metall mit Lappen (3, 8) am Innen- oder Außendurchmesser;
- Aufbringen eines organischen Reibbelages (9) auf zumindestens eine Fläche des planen Trägerringes; und
- Umformen des mit dem Reibbelag (9) versehenen planen Trägerrings (2) in eine konische Form.

2. Verfahren nach Anspruch 1, **dadurch gekennzeichnet, dass** der Verfahrensschritt des Zuschneidens durch Stanzen durchgeführt wird.

3. Verfahren nach Anspruch 1 oder 2, **dadurch gekennzeichnet, dass** der Reibbelag zum Aufbringen auf die plane Fläche des Trägerringes (2) verklebt wird.

4. Verfahren nach einem der Ansprüche 1 bis 3, **dadurch gekennzeichnet, dass** als Reibbelag (9) ein glatter Reibbelag verwendet wird.

5. Konusring (1) mit einem Trägerring (2), der zumindestens eine mit einem organischen Reibbelag (9) zu versehende Trägerfläche aufweist, herstellbar durch ein Verfahren gemäß einem der Ansprüche 1 bis 4.
